# EUROPÄISCHE PATENTSCHRIFT

(11) **EP 3 815 520 B1**
(45) Veröffentlichungstag und Bekanntmachung des Hinweises auf die Patenterteilung: **06.07.2022**
(21) Anmeldenummer: 19205812.1
(22) Anmeldetag: 29.10.2019
(51) Int. Cl.: A01G 20/47, E01H 1/08, F04D 25/06, A47L 5/22, F04D 29/42, F04D 29/66, F04D 29/44, F04D 25/08

(54) **HANDGEFÜHRTES BEARBEITUNGSGERÄT MIT RADIALGEBLÄSE**
HAND-HELD MACHINING APPARATUS WITH RADIAL BLOWER
APPAREIL D'USINAGE PORTATIF POURVU DE VENTILATEUR RADIAL

(43) Veröffentlichungstag der Anmeldung: 05.05.2021
(73) Patentinhaber: Andreas Stihl AG & Co. KG, 71336 Waiblingen (DE)
(72) Erfinder: Jetter, Simon, 73655 Plüderhausen (DE); Lechner, Sebastian, 71334 Waiblingen (DE); Schmid, Marc, 71570 Oppenweiler (DE); Geffers, Jan, 71336 Waiblingen-Neustadt (DE)
(74) Vertreter: Patentanwälte Ruff, Wilhelm, Beier, Dauster & Partner mbB

(56) Entgegenhaltungen:
- WO-A1-90/09524
- GB-A- 2 524 315
- US-A- 4 232 994
- US-A1- 2011 200 426

## Beschreibung

Die Erfindung bezieht sich auf ein handgeführtes Bearbeitungsgerät mit einem Radialgebläse. Derartige Bearbeitungsgeräte sind beispielsweise als handgeführte, motorgetriebene Garten- oder Forstbearbeitungsgeräte in Gebrauch, wie Heckenschneider, Heckenscheren, Motorsensen, Hochentaster, Laubblasgeräte, Kehrgeräte, Motorsägen, Rasenmäher und Vertikutierer, wobei als Motorantrieb ein Verbrennungsmotor oder ein batteriegespeister Elektromotor dient.

Das Radialgebläse dient z.B. dazu, einem Verbrennungsmotor oder einem Elektromotor Kühlluft zuzuführen oder Saugluft oder Blasluft für Saug- bzw. Blasgeräte bereitzustellen. So offenbart die Offenlegungsschrift DE 102 45 418 A1 ein spezielles Radialgebläse zur Kühlung eines Verbrennungsmotors, und die Offenlegungsschrift DE 10 2005 003 275 A1 offenbart ein spezielles Radialgebläse für ein rückentragbares Saug- /Blasgerät. US2011200426 offenbart ein weiteres Radialgebläse, das den technischen Hintergrund der Erfindung darstellt.

Bei Bearbeitungsgeräten dieser Art ist häufig die Geräuschentwicklung ein wichtiger Faktor. Speziell bei Geräten mit einem im Vergleich zum Verbrennungsmotor relativ leisen, akkugespeisten Elektromotor als Antriebsmotor für ein Bearbeitungswerkzeug kann die Geräuschentwicklung durch das Gebläse merklich zur gesamten Geräuschemission des Gerätes beitragen.

Der Erfindung liegt als technisches Problem die Bereitstellung eines handgeführten Bearbeitungsgerätes der eingangs genannten Art zugrunde, das im Vergleich zu herkömmlichen Geräten dieser Art einen Betrieb mit relativ geringen Geräuschemissionen insbesondere bezüglich seines Radialgebläses ermöglicht.

Die Erfindung löst dieses Problem durch die Bereitstellung eines handgeführten Bearbeitungsgerätes mit den Merkmalen des Anspruchs 1.

Beim erfindungsgemäßen Bearbeitungsgerät umfasst das Radialgebläse ein Gebläserad und einen Luftkanal, der einen das Gebläserad umgebenden Spiralabschnitt mit in Luftströmungsrichtung zunehmendem Kanalquerschnitt und einen an den Spiralabschnitt anschließenden, sich in Luftströmungsrichtung trichterförmig aufweitenden Auslasstrichterabschnitt mit einer radial inneren Begrenzungswand und einer radial äußeren Begrenzungswand umfasst, wobei der Auslasstrichterabschnitt in einer Luftauslassöffnung endet, deren Auslassbreite kleiner ist als ein Außendurchmesser des Gebläserades. Dabei weist die radial innere und/oder die radial äußere Begrenzungswand des Auslasstrichterabschnitts eine zum Spiralabschnitt gegensinnige Krümmung auf, und im Auslasstrichterabschnitt ist eine Zwischenwand zwischen der radial inneren und der radial äußeren Begrenzungswand angeordnet, wobei die Zwischenwand mit zum Spiralabschnitt gegensinniger Krümmung verläuft und den Auslasstrichterabschnitt in zwei sich jeweils in Luftströmungsrichtung trichterförmig aufweitende Teilabschnitte aufteilt.

Durch diese spezielle Konfiguration des Radialgebläses verursacht das Bearbeitungsgerät nur vergleichsweise geringe gebläseinduzierte Geräuschemissionen, insbesondere geringere Geräuschemissionen als mit herkömmlichen Radialgebläsen ohne Zwischenwand oder mit andersartigen Zwischenwandkonfigurationen oder andersartigen Konfigurationen des das Gebläserad umgebenden Spiralabschnitts und des an den Spiralabschnitt anschließenden Auslasstrichterabschnitts, wie dies auch experimentell verifiziert werden konnte. Die solchermaßen minimierte gebläsebedingte Geräuschemission schafft vorteilhaft die Voraussetzungen dafür, die akustische Qualität des Gerätes insgesamt im Vergleich zum Stand der Technik zu verbessern und dem Gerät im Betrieb insgesamt eine wertige Akustik zu verleihen.

Zu dieser Geräuschminimierung des Radialgebläses, genauer des von ihm bereitgestellten Luftstroms, tragen insbesondere die Maßnahmen bei, die Zwischenwand im Auslasstrichterabschnitt zwischen dessen beiden radialen Begrenzungswänden anzuordnen, der Zwischenwand hierbei einen zum Spiralabschnitt gegensinnigen Krümmungsverlauf zu geben und den Auslasstrichterabschnitt durch die Zwischenwand dergestalt in die zwei Teilabschnitte aufzuteilen, dass sich jeder Teilabschnitt seinerseits in Luftströmungsrichtung trichterförmig aufweitet. Dadurch kommt es in dem Bereich des Auslasstrichterabschnitts, in dem die Zwischenwand angeordnet ist, weder durch den Verlauf der beiden radialen Begrenzungswände noch durch den Verlauf der Zwischenwand zu einer Reduzierung des Luftströmungsquerschnitts in Luftströmungsrichtung. Vielmehr nimmt der Luftdurchlassquerschnitt in Luftströmungsrichtung in jedem der beiden Teilabschnitte aufgrund von deren trichterförmiger Aufweitung kontinuierlich, vorzugsweise stetig, zu.

In einer Weiterbildung der Erfindung sind ein innerer Querabstand der Zwischenwand von der radial inneren Begrenzungswand und ein äußerer Querabstand der Zwischenwand von der radial äußeren Begrenzungswand gleich groß oder unterscheiden sich um höchstens 10%, vorzugsweise höchstens 5%, d.h. der größere Querabstand ist dann um höchstens 10% bzw. 5% größer als der kleinere Querabstand. Dies definiert eine im Wesentlichen längsmittige Anordnung der Zwischenwand zwischen den beiden radialen Begrenzungswänden des Auslasstrichterabschnitts. Es zeigt sich, dass diese im Wesentlichen längsmittige Lage der Zwischenwand im Auslasstrichterabschnitt einen besonders günstigen Einfluss auf die Minderung der Luftströmungsgeräusche hat. In alternativen Weiterbildungen ist die Zwischenwand anders angeordnet, z.B. mit deutlich unterschiedlichen Querabständen zu den beiden radialen Begrenzungswänden.

In einer Weiterbildung der Erfindung sind eine innere Querschnittsfläche zwischen der Zwischenwand und der radial inneren Begrenzungswand und eine äußere Querschnittsfläche zwischen der Zwischenwand und der radial äußeren Begrenzungswand gleich groß sind oder sich um höchstens 10%, insbesondere höchstens 5%, unterscheiden. Es zeigt sich, dass diese flächengleiche Aufteilung der von der radial inneren und der radial äußeren Begrenzungswand im Auslasstrichterabschnitt radial begrenzten Querschnittsfläche, die für den Luftstrom zur Verfügung steht, durch die Zwischenwand einen besonders günstigen Einfluss auf die Minderung der Luftströmungsgeräusche hat. In alternativen Ausführungen ist die Zwischenwand anders unter Bildung deutlich unterschiedlicher Querschnittsflächen angeordnet.

In einer Weiterbildung der Erfindung ist die Wanddicke der Zwischenwand quer zur Luftströmungsrichtung konstant, oder eine größte Wanddicke ist um höchstens 10% größer als eine kleinste Wanddicke. Dies bedeutet, dass sich die Zwischenwand in Luftströmungsrichtung mit konstanter oder jedenfalls nur wenig schwankender Wanddicke erstreckt, was entsprechende wandbedingte Strömungsgeräusche vermeidet. In alternativen Weiterbildungen variiert die Wanddicke der Zwischenwand in ihrem Verlauf in Luftströmungsrichtung in einem stärkeren Maß, beispielsweise in Form einer keilförmigen Zunahme der Wanddicke in Luftströmungsrichtung.

In einer Weiterbildung der Erfindung schließt die Zwischenwand in Luftströmungsrichtung bündig mit der Luftauslassöffnung ab oder endet mit einem Abstand vor dieser, der höchstens 10% ihrer Länge in Luftströmungsrichtung und/oder höchstens das Doppelte ihrer Wanddicke beträgt. Es zeigt sich, dass diese Anordnung der Zwischenwand ebenfalls einer Reduzierung der vom Radialgebläse verursachten Strömungsgeräusche förderlich ist. In alternativen Weiterbildungen endet die Zwischenwand mit einem größeren Abstand vor der Luftauslassöffnung, z.B. mit einem Abstand von mehr als 10% der Zwischenwandlänge in Luftströmungsrichtung oder von mehr als dem Doppelten der Zwischenwanddicke.

In einer Weiterbildung der Erfindung erstreckt sich die Zwischenwand mit einer anströmseitigen Wandseitenkante bis in einen Übergangsbereich des Spiralabschnitts und des Auslasstrichterabschnitts. Auch diese Maßnahme erweist sich zur Minimierung der gebläsebedingten Geräuschemissionen als sehr vorteilhaft. In alternativen Weiterbildungen beginnt die Zwischenwand in Luftströmungsrichtung nicht schon in diesem Übergangsbereich, sondern mit stromabwärtigem Abstand von diesem im Auslasstrichterabschnitt.

In einer Weiterbildung der Erfindung setzt sich die radial innere und/oder die radial äußere Begrenzungswand des Auslasstrichterabschnitts entgegen der Luftströmungsrichtung in den Spiralabschnitt hinein fort und wechselt ihren Krümmungssinn in einem Übergangsbereich des Spiralabschnitts und des Auslasstrichterabschnitts. Auch diese Maßnahme erweist sich für die Reduzierung der gebläsebedingten Geräuschemissionen als sehr vorteilhaft. In einer speziellen Ausführung setzt sich die radial äußere Begrenzungswand um den gesamten Umfang des Gebläserades herum in den Spiralabschnitt fort und bildet im Spiralabschnitt des Luftkanals eine radial äußere Begrenzungswand desselben, wobei sie sich an ihrem stromaufwärtigen Ende mit der radial inneren Begrenzungswand des Auslasstrichterabschnitts vereinigt. In alternativen Ausgestaltungen setzt sich jede der beiden radialen Begrenzungswände des Auslasstrichterabschnitts oder mindestens die radial innere Begrenzungswand nicht in den Spiralabschnitt hinein fort und/oder wechselt den Krümmungssinn im Übergangsbereich nicht.

In einer Weiterbildung der Erfindung ist die Zwischenwand perforationsfrei geschlossen ausgebildet. Dies bedeutet, dass es keine Luftströmungsverbindung zwischen den beiden Teilabschnitten, in die der Auslasstrichterabschnitt von der Zwischenwand aufgeteilt wird, durch die Zwischenwand hindurch gibt. Auch dies trägt zur Minimierung der Luftströmungsgeräusche des Gebläses bei. In alternativen Weiterbildungen ist die Zwischenwand von einer perforierten Wand gebildet.

In einer Weiterbildung der Erfindung besitzt mindestens eine von der Zwischenwand, der radial inneren Begrenzungswand und der radial äußeren Begrenzungswand eine schalldämmende Oberfläche und/oder ist aus einem schallabsorbierenden Material gebildet, wobei unter schalldämmend vorliegend in breitem Bedeutungssinn auch schallreduzierend zu verstehen ist. Durch die schalldämmende Oberfläche bzw. das schallabsorbierende Material ist die jeweilige Wand, d.h. die Zwischenwand und/oder die radial innere Begrenzungswand und/oder die radial äußere Begrenzungswand, in der Lage, entsprechend als schalldämmendes Element zu wirken und dadurch zusätzlich zur Minimierung der Luftströmungsgeräusche beizutragen. In alternativen Weiterbildungen besitzt die jeweilige Wand eine Oberfläche, die keine Schalldämmeigenschaften besitzt, oder die Wand ist aus einem Material ohne schallabsorbierende Eigenschaften gebildet.

In einer Weiterbildung der Erfindung weist das Bearbeitungsgerät ein Bearbeitungswerkzeug, einen elektrischen Antriebsmotor für das Bearbeitungswerkzeug und/oder für das Radialgebläse und eine Kühlluftführung für den Antriebsmotor auf, wobei das Radialgebläse in der Kühlluftführung angeordnet ist. Durch die Verwendung des elektrischen Antriebsmotors ergeben sich im Vergleich zur Verwendung eines Verbrennungsmotors reduzierte Motorbetriebsgeräusche, und durch das Radialgebläse kann der elektrische Antriebsmotor effektiv mit Kühlluft gekühlt werden, bei gleichzeitig geringen Geräuschemissionen des Radialgebläses. In alternativen Weiterbildungen weist das Bearbeitungsgerät einen Verbrennungsmotor als Antriebsmotor für das Bearbeitungswerkzeug und/oder für das Radialgebläse auf.

Die Erfindung umfasst auch eine Ausführung, bei der die Zwischenwand von mehreren Einzelwänden repräsentiert ist, die im Auslasstrichterabschnitt zwischen der radial inneren und der radial äußeren Begrenzungswand voneinander beabstandet angeordnet sind und mit zum Spiralabschnitt gegensinniger Krümmung verlaufen und den Auslasstrichterabschnitt in eine entsprechende Anzahl von mehr als zwei sich jeweils in Luftströmungsrichtung trichterförmig aufweitenden Teilabschnitten aufteilen. Vorzugsweise sind in diesem Fall die einzelnen Zwischenwände äquidistant beabstandet, und/oder die Teilabschnitte besitzen untereinander gleich große oder nur geringfügig voneinander abweichende Querschnittsflächen.

Vorteilhafte Ausführungsformen sind in den Zeichnungen dargestellt. Diese und weitere vorteilhafte Ausführungsformen der Erfindung werden nachfolgend näher beschrieben. Hierbei zeigen:
Fig.1 eine schematische Blockdiagrammdarstellung eines handgeführten Bearbeitungsgerätes mit Bearbeitungswerkzeug, Antriebsmotor und Kühlluftführung mit Radialgebläse,
Fig. 2 eine Seitenansicht eines Bearbeitungsgerätes nach Art von Fig. 1 in Form eines Rasentrimmers,
Fig. 3 eine Detailseitenansicht eines Motorgehäuseteils des Gerätes von Fig. 2 bei abgenommener Motorgehäusehälfte,
Fig. 4 eine Schnittansicht eines z.B. in einem Bearbeitungsgerät nach Art der Fig. 1 bis 3 verwendbaren Radialgebläses längs einer Linie IV-IV in Fig. 3 und
Fig. 5 eine Seitenansicht des Radialgebläses längs einer Richtung V in Fig. 3 von unten.

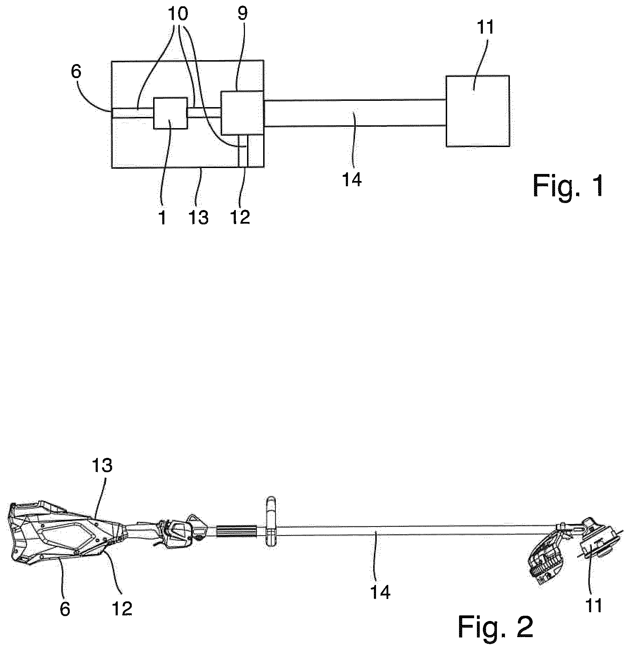

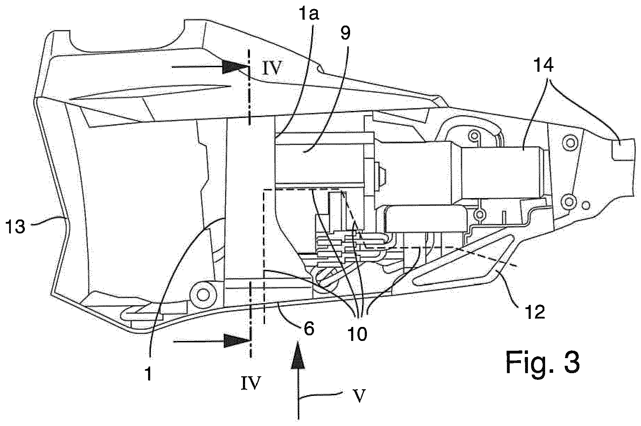

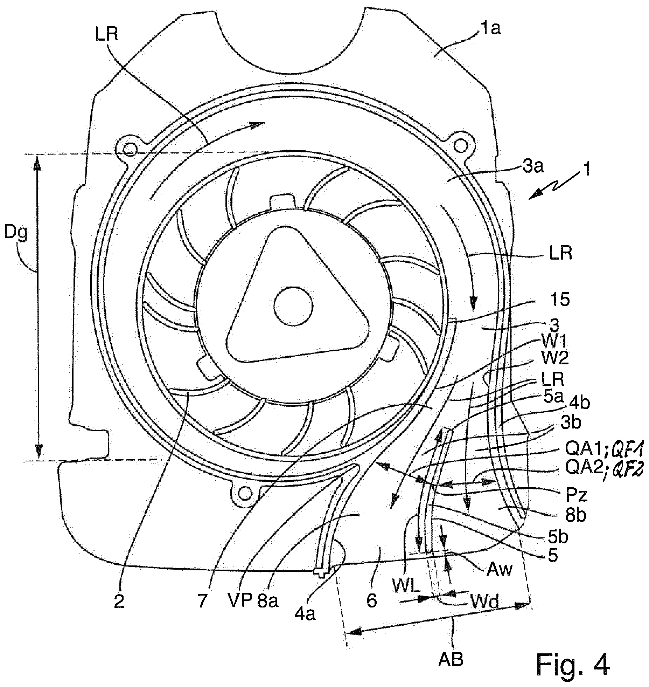

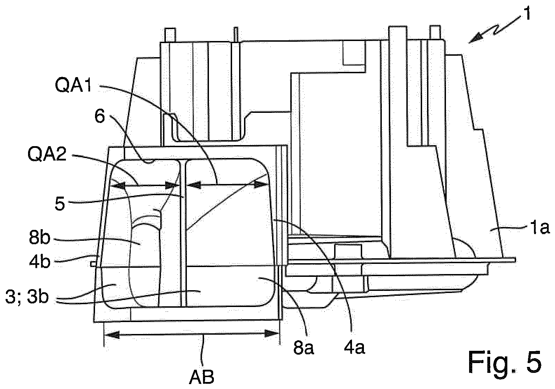

Das in den Fig. 1 bis 3 in beispielhaften Realisierungen gezeigte, handgeführte Bearbeitungsgerät kann insbesondere ein handgeführtes Garten- oder Forstbearbeitungsgerät sein und beinhaltet ein Radialgebläse 1, das, wie aus den Fig. 4 und 5 genauer zu erkennen, ein Gebläserad 2 und einen Luftkanal 3 aufweist, der einen das Gebläserad 2 umgebenden Spiralabschnitt 3a mit in Luftströmungsrichtung LR zunehmendem Kanalquerschnitt Qk und einen an den Spiralabschnitt 3a anschließenden, sich in Luftströmungsrichtung LR trichterförmig aufweitenden Auslasstrichterabschnitt 3b mit einer radial inneren Begrenzungswand 4a und einer radial äußeren Begrenzungswand 4b umfasst. Der Auslasstrichterabschnitt 3b endet in einer Luftauslassöffnung 6, deren Auslassbreite AB kleiner ist als ein Außendurchmesser Dg des Gebläserades 2. Die radial innere Begrenzungswand 4a und/oder die radial äußere Begrenzungswand 4b des Auslasstrichterabschnitts 3b weist eine zum Spiralabschnitt 3a gegensinnige Krümmung auf. In der Realisierung der Fig. 4 und 5 weisen beide Begrenzungswände 4a, 4b eine zum Spiralabschnitt 3a gegensinnige Krümmung auf, genauer gesagt der Spiralabschnitt eine Krümmung im Uhrzeigersinn und die beiden Begrenzungswände 4a, 4b des Auslasstrichterabschnitts 3b eine Krümmung im Gegenuhrzeigersinn. Der Luftkanal 3 kann insbesondere durch entsprechende Gestaltung eines Gebläsegehäuses 1a in dessen Innerem gebildet sein, wobei das Gebläserad 2 drehbeweglich in das Gebläsegehäuse 1a eingesetzt ist und das Gebläsegehäuse 1a beispielsweise aus zwei miteinander verbundenen Gehäusehalbschalen aufgebaut sein kann, wie in der gezeigten Ausführung.

Im Auslasstrichterabschnitt 3b ist zwischen der radial inneren Begrenzungswand 4a und der radial äußeren Begrenzungswand 4b eine Zwischenwand 5 angeordnet, die mit zum Spiralabschnitt 3a gegensinniger Krümmung verläuft, d.h. in Fig. 4 mit einer Krümmung im Gegenuhrzeigersinn, und den Auslasstrichterabschnitt 3b in zwei sich jeweils in Luftströmungsrichtung LR trichterförmig aufweitende Teilabschnitte 8a, 8b aufteilt.

In entsprechenden Ausführungen beinhaltet das Bearbeitungsgerät wie in den Beispielen der Fig. 1 bis 3 ein Bearbeitungswerkzeug 11, einen elektrischen Antriebsmotor 9 für das Bearbeitungswerkzeug 11 und/oder das Radialgebläse 1 und eine Kühlluftführung 10 für den Antriebsmotor 9, wobei das Radialgebläse 1 in der Kühlluftführung 10 angeordnet ist. In alternativen Ausführungen beinhaltet das Bearbeitungsgerät einen Verbrennungsmotor als Antriebsmotor anstelle des elektrischen Antriebsmotors 9.

In der gezeigten Realisierung der Fig. 1 bis 3 befindet sich der Antriebsmotor 9 in einem Motorgehäuse 13, in der sich die Kühlluftführung 10 von einem Lufteinlass 12 in das Gehäuse 13 bis zur Luftauslassöffnung 6 aus dem Radialgebläse 1 bzw. aus dem Motorgehäuse 13 erstreckt. Der Antriebsmotor 9 und optional weitere zu kühlende Gerätekomponenten befinden sich in der Kühlluftführung 10, und das Radialgebläse 1 sorgt für den nötigen Kühlluftstrom, wobei es vorzugsweise vom Antriebsmotor 9, alternativ von einem anderen Antrieb, angetrieben wird. In der gezeigten Realisierung ist das Bearbeitungsgerät vom sogenannten Schafttyp, bei dem das Bearbeitungswerkzeug 11 über einen Geräteschaft 14 mit dem Motorgehäuse 13 verbunden ist und durch den Schaft 14 hindurch eine Antriebswelle vom Antriebsmotor 9 zum Bearbeitungswerkzeug 11 führt. In alternativen Realisierungen ist das Bearbeitungsgerät von einem schaftlosen Typ, bei dem z.B. das Bearbeitungswerkzeug 11 im Motorgehäuse 13 oder direkt an dieses anschließend positioniert ist.

In vorteilhaften Ausführungen sind wie im gezeigten Ausführungsbeispiel ein innerer Querabstand QA1 der Zwischenwand 5 von der radial inneren Begrenzungswand 4a und ein äußerer Querabstand QA2 der Zwischenwand 5 von der radial äußeren Begrenzungswand 4b gleich groß oder unterscheiden sich um höchstens 10%, in bevorzugten Realisierungen um höchstens 5%. Dabei versteht es sich, dass die beiden Querabstände QA1, QA2 jeweils auf einen gleichen Punkt der Zwischenwand 5 entlang ihrer Längserstreckung bezogen sind, in Fig. 4 bespielhaft für einen Punkt Pz angegeben, da sich beide Querabstände QA1, QA2 aufgrund der trichterförmigen Aufweitung beider Teilabschnitte 8a, 8b in Luftströmungsrichtung vergrößern. Alternativ oder zusätzlich sind eine innere Querschnittsfläche QF1 zwischen der Zwischenwand 5 und der radial inneren Begrenzungswand 4a und eine äußere Querschnittsfläche QF2 zwischen der Zwischenwand 5 und der radial äußeren Begrenzungswand 4b gleich groß oder unterscheiden sich um höchstens 10%, insbesondere höchstens 5%, auch hier wieder bezogen auf einen gleichen Punkt der Zwischenwand 5 entlang ihrer Längserstreckung.

Dies bedeutet jeweils, dass der Auslasstrichterabschnitt 3b durch die Zwischenwand 5 in die beiden strömungstechnisch parallelen Teilabschnitte 8a, 8b mit im Wesentlichen gleichem oder jedenfalls nicht stark voneinander verschiedenem Durchströmungsquerschnitt geteilt ist, wobei die beiden Teilabschnitte 8a, 8b in ihrem Verlauf in Luftströmungsrichtung LR diesen im Wesentlichen gleichen bzw. nicht stark unterschiedlichen Durchströmungsquerschnitt gegenseitig beibehalten, während sich der Durchströmungsquerschnitt jedes der beiden Teilabschnitte 8a, 8b für sich genommen in Luftströmungsrichtung LR aufgrund der trichterförmigen Aufweitung kontinuierlich, vorzugsweise stetig, erhöht. Für bestimmte Anwendungen kann alternativ vorgesehen sein, die Zwischenwand 5 merklich zu einer der beiden radialen Begrenzungswände 4a, 4b des Auslasstrichterabschnitts 3b hin versetzt anzuordnen.

In vorteilhaften Ausführungen ist wie beim gezeigten Ausführungsbeispiel die Wanddicke Wd der Zwischenwand 5 quer zur Luftströmungsrichtung LR konstant. Alternativ ist die Wanddicke Wd zwar nicht konstant, schwankt jedoch um höchstens 10%. Für manche Anwendungen kann es weiter alternativ gewünscht sein, wenn sich die Wanddicke in größerem Maß entlang der Längserstreckung der Zwischenwand 5 ändert, z.B. keilförmig mit einer größten Wanddicke am Keilfuß, die dann typisch um ein Mehrfaches größer ist als die kleinste Wanddicke an der Keilspitze.

In vorteilhaften Ausführungen schließt die Zwischenwand 5 in Luftströmungsrichtung LR bündig mit der Luftauslassöffnung 6 ab oder endet vor dieser mit einem Abstand Aw, der zwar größer als null ist, jedoch höchstens 10% der Länge WL der Zwischenwand 5 in Luftströmungsrichtung LR und/oder höchstens das Doppelte der Wanddicke Wd der Zwischenwand 5 beträgt, wie beim gezeigten Ausführungsbeispiel. In alternativen Ausführungen endet die Zwischenwand 5 mit einem größeren Abstand Aw vor der Luftauslassöffnung 6.

In einer vorteilhaften Realisierung beträgt die Wanddicke Wd der Zwischenwand 5 wie beim gezeigten Ausführungsbeispiel höchstens 5% der Auslassbreite AB der Luftauslassöffnung 4. Für manche Anwendungen kann es alternativ gewünscht sein, eine demgegenüber größere Wanddicke Wd der Zwischenwand 5 zu wählen.

In vorteilhaften Ausführungen erstreckt sich die Zwischenwand 5 mit einer anströmseitigen Wandseitenkante 5a bis in einen Übergangsbereich 7 des Spiralabschnitts 3a und des Auslasstrichterabschnitts 3b. Es zeigt sich, dass diese relativ weit in Richtung des Spiralabschnitts 3a in den Luftkanal 3 hineinragende Erstreckung der Zwischenwand 5 für die gewünschte Geräuschminimierung sehr vorteilhaft ist.

In entsprechenden Realisierungen setzt sich die radial innere und/oder die radial äußere Begrenzungswand 4a, 4b des Auslasstrichterabschnitts 3b entgegen der Luftströmungsrichtung LR in den Spiralabschnitt 3a hinein fort und wechselt im Übergangsbereich 7 ihren Krümmungssinn. Im gezeigten Beispiel erstreckt sich die radial innere Begrenzungswand 4a bis zu einer anströmseitigen Endkante 15 in den Spiralabschnitt 3a hinein und wechselt an einem zugehörigen Wendepunkt W1 im Übergangsbereich 7 ihren Krümmungssinn. Die radial äußere Begrenzungswand 4b setzt sich in den gesamten Spiralabschnitt 3a hinein um das Gebläserad 2 herum fort und vereinigt sich an einem Vereinigungspunkt VP mit der radial inneren Begrenzungswand 4a. Außerdem wechselt die äußere Begrenzungswand 4b ihren Krümmungssinn an einem Wendepunkt W2 im Übergangsbereich 7. Für manche Anwendungen kann eine alternative Realisierung wünschenswert sein, bei der die radialen Begrenzungswände 4a, 4b ihren Krümmungssinn nicht im Übergangsbereich 7 wechseln bzw. sich nicht in den Spiralabschnitt 3a hinein fortsetzen, insbesondere die radial innere Begrenzungswand 4a.

In entsprechenden Ausführungen ist die Zwischenwand 5 wie beim gezeigten Ausführungsbespiel perforationsfrei geschlossen ausgebildet, d.h. die Zwischenwand 5 weist keine Öffnungen zwischen den beiden Teilabschnitten 8a, 8b auf, in die sie den Auslasstrichterabschnitt 3b teilt. Für manche Anwendungen kann eine alternative Gestaltung erwünscht sein, bei der die Zwischenwand 5 als perforierte Wand mit einer oder mehreren Perforationsöffnungen gebildet ist.

In vorteilhaften Realisierungen besitzt die Zwischenwand 5 wie beim gezeigten Beispiel eine schalldämmende Oberfläche 5b und/oder ist aus einem schallabsorbierenden Material gebildet. Geeignete Oberflächenbeschichtungen bzw. Oberflächenprofilierungen und geeignete Wandmaterialien zur Bereitstellung dieser Schalldämmcharakteristik sind für solche Anwendungszwecke an sich bekannt, was daher hier keiner näheren Erläuterungen bedarf. Bei alternativen Ausführungen kann die Zwischenwand 5 ohne schalldämmende Oberfläche aus einem nicht-schallabsorbierenden Material gebildet sein.

Wie die gezeigten und die weiteren oben erläuterten Ausführungsbeispiele deutlich machen, stellt die Erfindung ein handgeführtes Bearbeitungsgerät zur Verfügung, das in sehr vorteilhafter Weise hinsichtlich geringer Geräuschemission seines Radialgebläses optimiert ist. Das Bearbeitungsgerät kann insbesondere ein handgeführtes Garten- oder Forstbearbeitungsgerät eines beliebigen, herkömmlichen Typs sein, soweit in diesem ein Radialgebläse verwendet wird.

## Patentansprüche

1. Handgeführtes Bearbeitungsgerät, insbesondere handgeführtes Garten- oder Forstbearbeitungsgerät, mit
- einem Radialgebläse (1), das ein Gebläserad (2) und einen Luftkanal (3) beinhaltet, der einen das Gebläserad (2) umgebenden Spiralabschnitt (3a) mit in Luftströmungsrichtung (LR) zunehmendem Kanalquerschnitt (Qk) und einen an den Spiralabschnitt (3a) anschließenden, sich in Luftströmungsrichtung (LR) trichterförmig aufweitenden Auslasstrichterabschnitt (3b) mit einer radial inneren Begrenzungswand (4a) und einer radial äußeren Begrenzungswand (4b) umfasst, wobei der Auslasstrichterabschnitt (3b) in einer Luftauslassöffnung (6) endet, deren Auslassbreite (AB) kleiner ist als ein Außendurchmesser (Dg) des Gebläserades (2),
- wobei die radial innere und/oder die radial äußere Begrenzungswand (4a, 4b) des Auslasstrichterabschnitts (3b) eine zum Spiralabschnitt (3a) gegensinnige Krümmung aufweist und
- wobei im Auslasstrichterabschnitt (3b) eine Zwischenwand (5) zwischen der radial inneren und der radial äußeren Begrenzungswand (4a, 4b) angeordnet ist, wobei die Zwischenwand (5) mit zum Spiralabschnitt (3a) gegensinniger Krümmung verläuft und den Auslasstrichterabschnitt (3b) in zwei sich jeweils in Luftströmungsrichtung (LR) trichterförmig aufweitende Teilabschnitte (8a, 8b) aufteilt.

2. Handgeführtes Bearbeitungsgerät nach Anspruch 1, wobei ein innerer Querabstand (QA1) der Zwischenwand (5) von der radial inneren Begrenzungswand (4a) und ein äußerer Querabstand (QA2) der Zwischenwand (5) von der radial äußeren Begrenzungswand (4b) gleich groß sind oder sich um höchstens 10%, insbesondere höchstens 5%, unterscheiden.

3. Handgeführtes Bearbeitungsgerät nach Anspruch 1 oder 2, wobei eine innere Querschnittsfläche (QF1) zwischen der Zwischenwand (5) und der radial inneren Begrenzungswand (4a) und eine äußere Querschnittsfläche (QF2) zwischen der Zwischenwand (5) und der radial äußeren Begrenzungswand (4b) gleich groß sind oder sich um höchstens 10%, insbesondere höchstens 5%, unterscheiden.

4. Handgeführtes Bearbeitungsgerät nach einem der Ansprüche 1 bis 3, wobei die Wanddicke (Wd) der Zwischenwand (5) quer zur Luftströmungsrichtung (LR) konstant ist oder eine größte Wanddicke um höchstens 10% größer als eine kleinste Wanddicke ist.

5. Handgeführtes Bearbeitungsgerät nach einem der Ansprüche 1 bis 4, wobei die Zwischenwand (5) in Luftströmungsrichtung (LR) bündig mit der Luftauslassöffnung (6) abschließt oder mit einem Abstand (Aw) vor dieser endet, der höchstens 10% ihrer Länge (WL) in Luftströmungsrichtung (LR) und/oder höchstens das Doppelte ihrer Wanddicke (Wd) beträgt.

6. Handgeführtes Bearbeitungsgerät nach einem der Ansprüche 1 bis 5, wobei die Wanddicke (Wd) der Zwischenwand (5) höchstens 5% der Auslassbreite (AB) der Luftauslassöffnung (4) beträgt.

7. Handgeführtes Bearbeitungsgerät nach einem der Ansprüche 1 bis 6, wobei sich die Zwischenwand (5) mit einer anströmseitigen Wandseitenkante (5a) bis in einen Übergangsbereich (7) des Spiralabschnitts (3a) und des Auslasstrichterabschnitts (3b) erstreckt.

8. Handgeführtes Bearbeitungsgerät nach einem der Ansprüche 1 bis 7, wobei sich die radial innere und/oder die radial äußere Begrenzungswand (4a, 4b) des Auslasstrichterabschnitts (3b) entgegen der Luftströmungsrichtung (LR) in den Spiralabschnitt (3a) hinein fortsetzt und ihren Krümmungssinn in einem Übergangsbereich (7) des Spiralabschnitts (3a) und des Auslasstrichterabschnitts (3b) wechselt.

9. Handgeführtes Bearbeitungsgerät nach einem der Ansprüche 1 bis 8, wobei die Zwischenwand (5) perforationsfrei geschlossen ausgebildet ist.

10. Handgeführtes Bearbeitungsgerät nach einem der Ansprüche 1 bis 9, wobei mindestens eine von der Zwischenwand (5), der radial inneren Begrenzungswand (4a) und der radial äußeren Begrenzungswand (4b) eine schalldämmende Oberfläche besitzt und/oder aus einem schallabsorbierenden Material gebildet ist.

11. Handgeführtes Bearbeitungsgerät nach einem der Ansprüche 1 bis 10, wobei es ein Bearbeitungswerkzeug (11), einen elektrischen Antriebsmotor (9) für das Bearbeitungswerkzeug (11) und eine Kühlluftführung (10) für den Antriebsmotor (9) aufweist, wobei das Radialgebläse (1) in der Kühlluftführung (10) angeordnet ist.

## Claims

1. Hand-guided working apparatus, preferably a hand-guided garden or forestry working apparatus, comprising
- a radial fan (1) which has a fan impeller (2) and an air duct (3), said air duct comprising a spiral portion (3a) surrounding the fan impeller (2) and having a duct cross section (Qk) which increases in air flow direction (LR) and an outlet funnel portion (3b) which adjoins the spiral portion (3a), widens in a funnel shape in air flow direction (LR), and has a radially inner boundary wall (4a) and a radially outer boundary wall (4b), wherein the outlet funnel portion (3b) ends in an air outlet opening (6), an outlet width (AB) of the air outlet opening being smaller than an outside diameter (Dg) of the fan impeller (2),
- wherein the radially inner and/or the radially outer boundary wall (4a, 4b) of the outlet funnel portion (3b) have/has a curvature opposed to that of the spiral portion (3a), and
- wherein an intermediate wall (5) is arranged in the outlet funnel portion (3b), between the radially inner and the radially outer boundary wall (4a, 4b), the intermediate wall (5) extending with a curvature opposed to that of the spiral portion (3a) and dividing the outlet funnel portion (3b) into two component portions (8a, 8b), each widening in the shape of a funnel in the air flow direction (LR).

2. Hand-guided working apparatus according to Claim 1, wherein an inner transverse spacing (QA1) of the intermediate wall (5) from the radially inner boundary wall (4a) and an outer transverse spacing (QA2) of the intermediate wall (5) from the radially outer boundary wall (4b) are equal or differ by at most 10%, preferably by at most 5%.

3. Hand-guided working apparatus according to Claim 1 or 2, wherein an inner cross-sectional area (QF1) between the intermediate wall (5) and the radially inner boundary wall (4a) and an outer cross-sectional area (QF2) between the intermediate wall (5) and the radially outer boundary wall (4b) are equal or differ by at most 10%, preferably by at most 5%.

4. Hand-guided working apparatus according to any of Claims 1 to 3, wherein a wall thickness (Wd) of the intermediate wall (5) transversely to the air flow direction (LR) is constant, or a maximum wall thickness is at most 10% greater than a minimum wall thickness.

5. Hand-guided working apparatus according to any of Claims 1 to 4, wherein the intermediate wall (5) ends flush with the air outlet opening (6) in the air flow direction (LR) or ends before the latter at a distance (Aw) which is at most 10% of a length (WL) of said wall in the air flow direction (LR) and/or at most twice a wall thickness (Wd) of said wall.

6. Hand-guided working apparatus according to any of Claims 1 to 5, wherein a wall thickness (Wd) of the intermediate wall (5) is at most 5% of the outlet width (AB) of the air outlet opening (4).

7. Hand-guided working apparatus according to any of Claims 1 to 6, wherein an inflow-side wall side edge (5a) of the intermediate wall (5) extends into a transitional region (7) of the spiral portion (3a) and of the outlet funnel portion (3b) .

8. Hand-guided working apparatus according to any of Claims 1 to 7, wherein the radially inner and/or the radially outer boundary wall (4a, 4b) of the outlet funnel portion (3b) continue/continues counter to the air flow direction (LR) into the spiral portion (3a) and change/changes their/its direction of curvature in a transitional region (7) of the spiral portion (3a) and of the outlet funnel portion (3b).

9. Hand-guided working apparatus according to any of Claims 1 to 8, wherein the intermediate wall (5) is of continuous, perforation-free form.

10. Hand-guided working apparatus according to any of Claims 1 to 9, wherein at least one of the intermediate wall (5), the radially inner boundary wall (4a) and the radially outer boundary wall (4b) has a sound-damping surface and/or is formed from a sound-absorbing material.

11. Hand-guided working apparatus according to any of Claims 1 to 10, wherein said apparatus has a working tool (11), an electric drive motor (9) for the working tool (11), and a cooling air duct (10) for the drive motor (9), wherein the radial fan (1) is arranged in the cooling air duct (10).

## Revendications

1. Appareil de travail portatif, en particulier appareil de jardinage ou forestier portatif, comportant
- un ventilateur radial (1), qui contient une roue de ventilateur (2) et un canal d'air (3), qui comporte une partie en spirale (3a) entourant la roue de ventilateur (2) et dotée d'une section transversale de canal (Qk) croissante dans le sens d'écoulement de l'air (LR) et une partie d'entonnoir de sortie (3b) se raccordant à la partie en spirale (3a), s'élargissant en forme d'entonnoir dans le sens d'écoulement de l'air (LR) et dotée d'une paroi de limitation (4a) radialement intérieure et d'une paroi de limitation (4b) radialement extérieure, la partie d'entonnoir de sortie (3b) se terminant dans une ouverture de sortie d'air (6) dont la largeur de sortie (AB) est inférieure à un diamètre extérieur (Dg) de la roue de ventilateur (2),
- la paroi de limitation radialement intérieure et/ou la paroi de limitation radialement extérieure (4a, 4b) de la partie d'entonnoir de sortie (3b) présentant une courbure opposée à celle de la partie en spirale (3a) et
- une paroi intermédiaire (5) étant disposée entre la paroi de limitation radialement intérieure et la paroi de limitation radialement extérieure (4a, 4b) dans la partie d'entonnoir de sortie (3b), la paroi intermédiaire (5) s'étendant avec une courbure opposée à celle de la partie en spirale (3a) et divisant la partie d'entonnoir de sortie (3b) en deux sections partielles (8a, 8b) s'élargissant respectivement en forme d'entonnoir dans le sens d'écoulement de l'air (LR).

2. Appareil de travail portatif selon la revendication 1, une distance transversale intérieure (QA1) de la paroi intermédiaire (5) à la paroi de limitation radialement intérieure (4a) et une distance transversale extérieure (QA2) de la paroi intermédiaire (5) à la paroi de limitation radialement extérieure (4b) étant égales ou différant d'au maximum 10%, en particulier d'au maximum 5%.

3. Appareil de travail portatif selon la revendication 1 ou 2, une aire en section transversale intérieure (QF1) entre la paroi intermédiaire (5) et la paroi de limitation radialement intérieure (4a) et une aire en section transversale extérieure (QF2) entre la paroi intermédiaire (5) et la paroi de limitation radialement extérieure (4b) étant égales ou différant d'au maximum 10%, en particulier d'au maximum 5%.

4. Appareil de travail portatif selon l'une des revendications 1 à 3, l'épaisseur de paroi (Wd) de la paroi intermédiaire (5) étant constante transversalement au sens d'écoulement de l'air (LR) ou une épaisseur de paroi maximale étant supérieure d'au maximum 10% à une épaisseur de paroi minimale.

5. Appareil de travail portatif selon l'une des revendications 1 à 4, la paroi intermédiaire (5) se terminant en affleurement avec l'ouverture de sortie d'air (6) dans le sens d'écoulement de l'air (LR) ou se terminant à une distance (Aw) devant celle-ci, laquelle distance vaut au maximum 10% de sa longueur (WL) dans le sens d'écoulement de l'air (LR) et/ou au maximum le double de son épaisseur de paroi (Wd).

6. Appareil de travail portatif selon l'une des revendications 1 à 5, l'épaisseur de paroi (Wd) de la paroi intermédiaire (5) valant au maximum 5% de la largeur de sortie (AB) de l'ouverture de sortie d'air (4) .

7. Appareil de travail portatif selon l'une des revendications 1 à 6, la paroi intermédiaire (5) s'étendant par un bord latéral de paroi (5a) côté afflux jusque dans une région de transition (7) de la partie en spirale (3a) et de la partie d'entonnoir de sortie (3b).

8. Appareil de travail portatif selon l'une des revendications 1 à 7, la paroi de limitation radialement intérieure et/ou la paroi de limitation radialement extérieure (4a, 4b) de la partie d'entonnoir de sortie (3b) se prolongeant en sens inverse du sens d'écoulement de l'air (LR) dans la partie en spirale (3a) et leur sens de courbure changeant dans une région de transition (7) de la partie en spirale (3a) et de la partie d'entonnoir de sortie (3b).

9. Appareil de travail portatif selon l'une des revendications 1 à 8, la paroi intermédiaire (5) étant réalisée de manière fermée sans perforations.

10. Appareil de travail portatif selon l'une des revendications 1 à 9, au moins une parmi la paroi intermédiaire (5), la paroi de limitation radialement intérieure (4a) et la paroi de limitation radialement extérieure (4b) possédant une surface atténuant le bruit et/ou étant formée à partir d'un matériau absorbant le bruit.

11. Appareil de travail portatif selon l'une des revendications 1 à 10, celui-ci comprenant un outil de travail (11), un moteur d'entraînement électrique (9) pour l'outil de travail (11) et un guide d'air de refroidissement (10) pour le moteur d'entraînement (9), le ventilateur radial (1) étant disposé dans le guide d'air de refroidissement (10).
